# EUROPEAN PATENT SPECIFICATION

(11) **EP 1 541 450 B1**
(45) Date of publication and mention of the grant of the patent: **05.12.2012**
(21) Application number: 04106460.1
(22) Date of filing: 10.12.2004
(51) Int. Cl.: B62D 25/00, B60J 10/02

(54) **Method of bonding a window to a vehicle, and the related vehicle body**
Verfahren zum Verkleben einer Scheibe an einem Fahrzeug, und die zugehörige Karosserie
Procédé de collage d'un panneau sur un véhicule, et la carrosserie associée

(30) Priority: 11.12.2003 IT MI20032421
(43) Date of publication of application: 15.06.2005
(73) Proprietor: IVECO S.p.A., 10156 Torino (IT)
(72) Inventor: Giovine, Mauro, 10090 Castiglione Torinese (IT); Armigliato, Marco, 10100 Torino (IT); Lambert, Bruno, 10050 Novalesa (IT)
(74) Representative: Gervasi, Gemma

(56) References cited:
- US-A- 4 146 263
- US-A- 4 292 774
- US-A- 4 869 546
- US-A- 4 938 521
- PATENT ABSTRACTS OF JAPAN vol. 008, no. 203 (M-326), 18 September 1984 (1984-09-18) -& JP 59 092215 A (NISSAN JIDOSHA KK), 28 May 1984 (1984-05-28)
- PATENT ABSTRACTS OF JAPAN vol. 011, no. 146 (M-587), 13 May 1987 (1987-05-13) -& JP 61 282117 A (NISSAN SHATAI CO LTD), 12 December 1986 (1986-12-12)

## Description

This invention relates to a method of bonding a window to a vehicle body, and the relative vehicle body for applying the method.

In conventional systems the window is bonded to the pinchweld flange where the body panels are welded together in correspondence with the windscreen aperture in the vehicle body.

Since the adhesives that are generally used can be damaged by exposure to the sun's ultraviolet rays, which could result in disbonding, an opaque coating, which is usually black, must be applied to the perimeter of the glass, to mask the adhesive, so that it is never exposed to the sun's rays, even after it has been applied and dried.

The opaque coating must be wider than the line of adhesive and must extend beyond this, in order to shade the adhesive even from the oblique rays of the sun. It may extend inwards by as much as 30 mm from the edge of the glass, with the result that the driver's area of vision is reduced.

Furthermore the surface of the pinchweld flange to which the adhesive is applied is uneven, with depressions or irregularities in correspondence with the welding spots. This reduces the bonding strength of the adhesive, which also varies in thickness, given such deformations.

JP 59 092215 A discloses a method of bonding a window to a vehicle body, in which bonding is performed on the inside edge of the window, by a glue line applied in a rack near to the pinchweld flange on the perimeter surface of the body aperture hosting the window.

JP 61 282117 A discloses a method of bonding a window to a vehicle body in which bonding is performed by a glue line applied over the pinchweld flange, with the intermediary of an internal spacer, which remains hindered behind the window edge.

The purpose of this invention is to overcome all the drawbacks described above with a method of bonding a window to a vehicle, and the relative vehicle body for applying such procedure, as described more fully in the claims, which are an integral part of this description.

The invention is characterized by a method of bonding a window to a vehicle body as described in claim 1, and by a vehicle body as described in claim 5.

In the following by the term "window" it is meant any kind of glass for vehicles including windscreen and the like.

The purposes and advantages of this invention will become clear from the following detailed description of a preferred embodiment and the drawings that are attached hereto, which are merely illustrative and not limitative, in which:
- figure1 shows a conventional glass bonding method;
- figure 2 shows an assembly view of the part of the body to which a window is bonded according to this invention;
- figures 3, 4 and 5 show enlarged views of cross-sections 1-1, 2-2, 3-3 of fig.2.

In the drawings the same reference numbers and letters are used to identify the same elements.

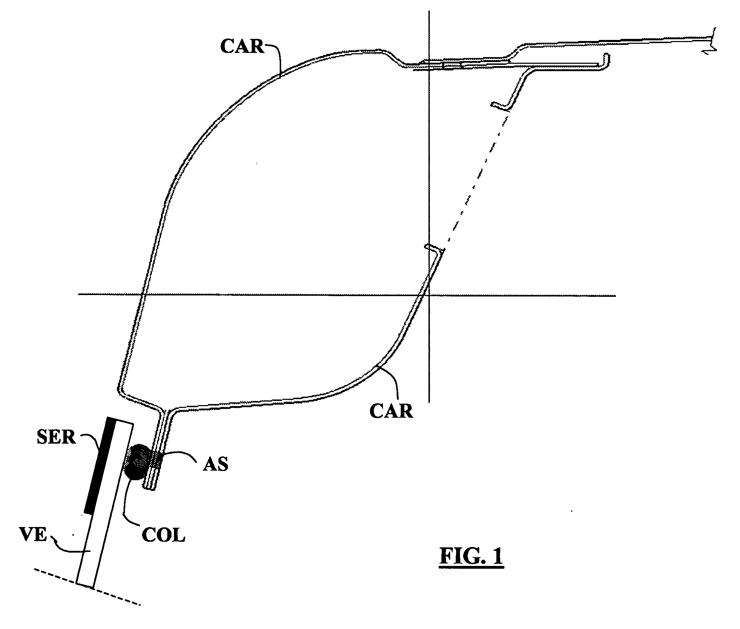

Fig.1 illustrates a cross-section of the edge of the body CAR, and a pinchweld flange AS where the body panels are welded together in correspondence with the opening for the window VE in the body. According to the conventional bonding procedure, COL indicates a glue line on the pinchweld flange AS. SER indicates a cross-section of a black opaque coating covering the glue line on the window VE. As shown in the drawing, the opaque coating SER extends inwards towards the center of the glass beyond the flange, thus reducing the total area of vision.

Therefore, according to this invention, instead of being applied along the pinchweld flange, the adhesive is applied further back, in a recess obtained along the edge of the perimeter surface of the vehicle body, thus increasing the perimeter surface of the windscreen, so that the bonding area is smooth, even and with no welding spots.

Furthermore by moving the glue line back, the opaque coating is also moved back in relation to the perimeter flange, thus eliminating the problems in connection with the reduction of the area of vision, in that the opaque coating on the glass does not extend beyond the edge of the flange.

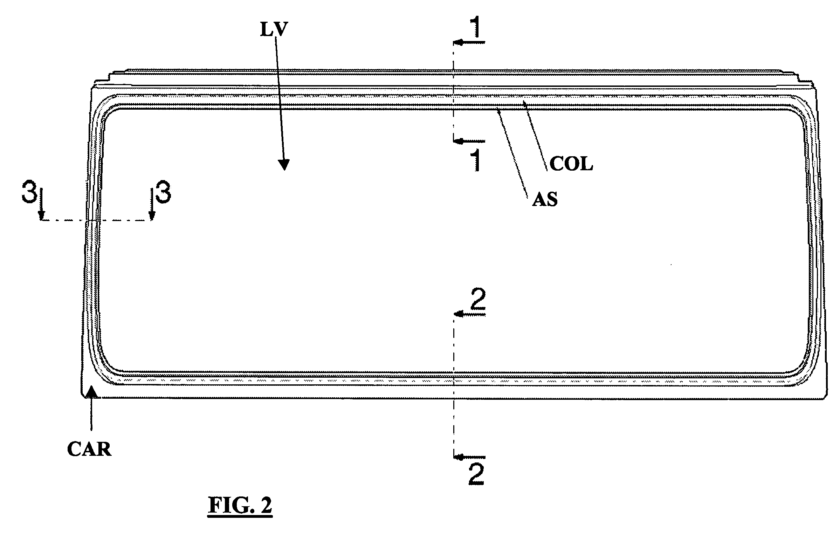

The example of a preferred embodiment of this invention described below with reference to figures 2, 3, 4 and 5, refers to a windscreen in a commercial vehicle, but the bonding process according to this invention can clearly be applied to any window in any type of vehicle.

In fig. 2 CAR indicates the part of the vehicle body that comprises the windscreen aperture LV; AS indicates the pinchweld flange around the windscreen aperture, and COL indicates the glue line.

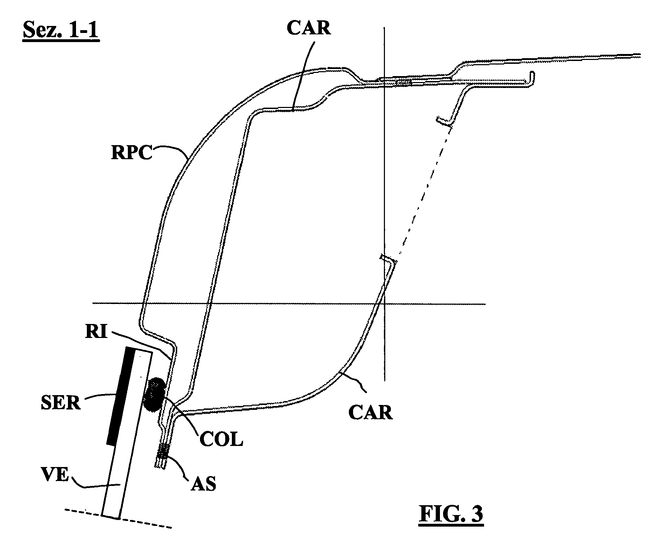

Figures 3, 4 and 5 are enlarged views of the respective cross-sections 1-1 (top edge), 2-2 (bottom edge) and 3-3 (side pillar) of the windscreen aperture shown in figure 2. The figures illustrate a cross-section of the edge of the body CAR, and the pinchweld flange AS where the body panels are welded together around the opening for the window VE.

According to another aspect of the invention, a mounting frame RPC is welded to the body CAR along the two perimeter lines, one of which consists of the pinchweld flange AS. The glue line COL is no longer on the pinchweld flange, but further back in a recess RI obtained in the mounting frame RPC on the edge of the perimeter surface of the body, so that the windscreen is brought forward and made slightly larger.

The mounting frame RPC is cast in a single piece so that the opening that houses the window follows the shape of the edge of the glass, and the bonding area is smooth, even and with no welding spots.

The application of the mounting frame RPC constitutes an element of this invention. Without a single piece mounting frame, the glass would have to be fitted directly to the bodywork around the windscreen. Such bodywork usually consists of four parts, namely the bottom edge, top edge and two side pillars. The surface at the joints between such four parts would be discontinuous, with depressions or dangerous protrusions that would undermine the correct bonding of the glass at such points. In that case a number of additional and somewhat complex processes would be required in order to make the surface level.

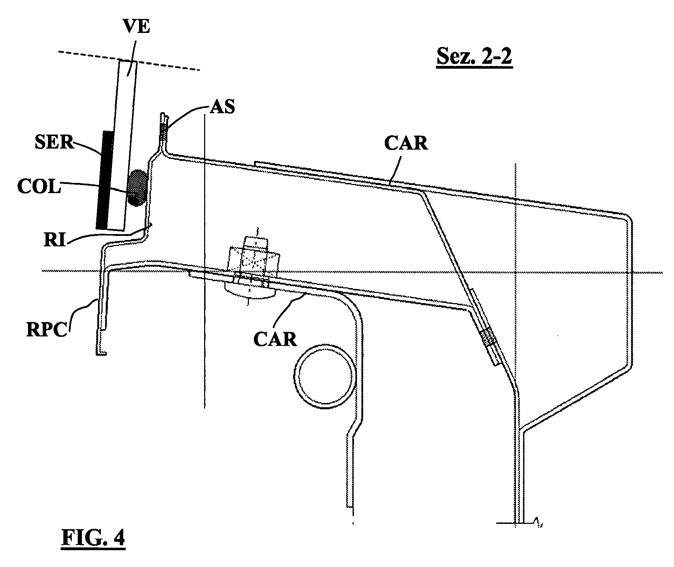

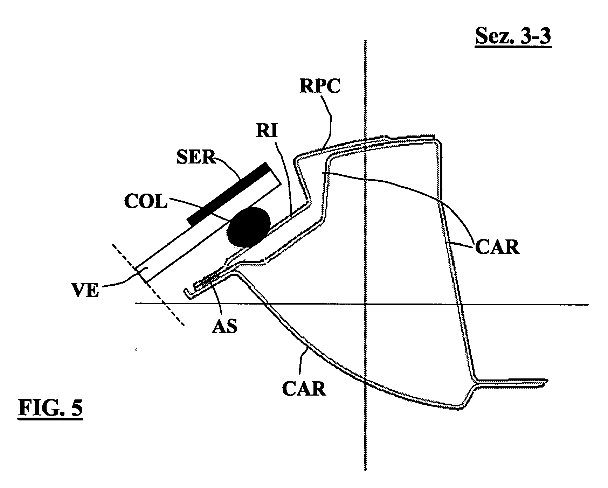

According to the specific points at which the single piece mounting frame is fitted to the bodywork, such mounting frame may be part of the actual bodywork structure as shown in fig. 4 in correspondence with the bottom edge of the windscreen aperture, where there is no corresponding section of the body CAR behind the frame RPC, or it may simply be fitted on top of the structure, as shown in figures 3 and 5 in correspondence with the top edge or side pillars, where there is a corresponding section of the body CAR behind the frame RPC. In any case, since such mounting frame is cast in a single piece, it guarantees the best type of bonding surface. The frame may be made of the same material as the body.

Assembly consists of first applying the mounting frame, which is welded along the two perimeter lines. The windscreen is then fitted from the front, using the type of adhesive that is used for conventional bonding processes.

The present invention achieves a number of advantages over the prior art.

Such advantages consist of the fact that the bonding area is smooth, even and with no welding spots, ensuring improved bonding strength, more even application and a reduction in adhesive drying times.

Furthermore, the problems in connection with the reduction of the driver's angle of vision due to the opaque coating are eliminated.

From the description set forth above it will be possible for the person skilled in the art to embody the invention without introducing any further construction details.

## Claims

1. Method of bonding a window to a vehicle, the vehicle body having at least one window aperture comprising a pinchweld flange (AS) where the body panels are welded together, in which bonding is performed on the inside edge of the window, **characterized in that** it comprises:
- a step in which a mounting frame (RPC) is cast in a single piece so that the opening for housing the window follows the shape of the edge of the glass,
- a step in which said mounting frame (RPC) is fitted and welded to said body (CAR) along two perimeter lines, one line comprising said pinchweld flange (AS), the other line being on said body, outward of said opening for housing the window, so that said inside edge of the window is facing a part of said mounting frame (RPC), the other part of the mounting frame (RPC) surrounding the window out of the perimeter of the window,
- a step in which a glue line (COL) is applied on said mounting frame (RPC) in a position further back from the pinchweld flange (AS), towards the perimeter of the window and around the pinchweld flange (AS).

2. Method according to claim 1, **characterized in that** said mounting frame (RPC) is a part of the bodywork structure or is applied above the structure, or both.

3. Method according to claim 1, **characterized in that** it comprises a further step in which an opaque coating (SER) is applied around the perimeter of the window, in order to cover said glue line (COL), and so that the inside edge of said opaque coating does not extend beyond said pinchweld flange (AS).

4. Vehicle body, with at least one window aperture comprising a pinchweld flange (AS) where the body panels are welded together, in which bonding is performed on the inside edge of the window, **characterized in that** it comprises:
- at least one mounting frame (RPC), cast in a single piece so that the opening for housing the window follows the shape of the edge of the glass and welded to said body (CAR) along two perimeter lines, one line comprising said pinchweld flange (AS), the other line being on said body, outward of said opening for housing the window, so that said inside edge of the window is faced a part of said mounting frame (RPC), the other part of the mounting frame (RPC) surrounding the window out of the perimeter of the window,
- a glue line (COL) applied on said mounting frame in a position further back from pinchweld flange (AS), towards the perimeter of the window around the pinchweld flange (AS).

5. Vehicle body according to claim 4 **characterized in that** said mounting frame (RPC) may be a part of the body structure, or applied above the structure, or both.

6. Vehicle body according to claim 4 **characterized in that** it further comprises an opaque coating (SER) applied around the perimeter of the glass, in order to cover said glue line (COL), and so that the inside edge of said opaque coating does not extend beyond said pinchweld flange (AS).

## Patentansprüche

1. Verfahren zum Verbinden eines Fensters mit einem Fahrzeug, wobei die Fahrzeugkarosserie zumindest eine Fensterdurchbrechung aufweist, die einen Quetschschweißflansch (AS) umfasst, wobei die Karosserietafeln miteinander verschweißt sind, wobei das Verbinden an dem inneren Rand des Fensters ausgeführt wird,
**dadurch gekennzeichnet, dass** es umfasst:
- einen Schritt, bei dem ein Montagerahmen (RPC) in ein einzelnes Stück gegossen wird, so dass die Öffnung zur Aufnahme des Fensters der Form des Rands der Scheibe folgt,
- einen Schritt, bei dem der Montagerahmen (RPC) in die Karosserie (CAR) entlang zwei Umfangslinien eingepasst und daran verschweißt wird, wobei eine Line den Quetschschweißflansch (AS) umfasst und die andere Linie sich an der Karosserie auswärts der Öffnung zur Aufnahme des Fensters befindet, so dass der Innenrand des Fensters zu einem Teil des Montagerahmens (RPC) weist, wobei das andere Teil des Montagerahmens (RPC) das Fenster außerhalb des Umfangs des Fensters umgibt,
- einen Schritt, bei dem eine Klebstofflinie (COL) auf den Montagerahmen (RPC) in einer Position weiter hinten von dem Quetschschweißflansch (AS) zu dem Umfang des Fensters und um den Quetschschweißflansch (AS) aufgetragen wird.

2. Verfahren nach Anspruch 1,
**dadurch gekennzeichnet,dass**
der Montagerahmen (RPC) ein Teil des Karosserieaufbaus oder über dem Aufbau aufgetragen oder beides ist.

3. Verfahren nach Anspruch 1,
**dadurch gekennzeichnet,dass**
es einen weiteren Schritt umfasst, bei dem eine undurchsichtige Beschichtung (SER) um den Umfang des Fensters aufgetragen wird, um die Klebstofflinie (COL) zu bedecken, und so dass der Innenrand der undurchsichtigen Beschichtung sich nicht über den Quetschschweißflansch (AS) hinaus erstreckt.

4. Fahrzeugkarosserie mit zumindest einer Fensterdurchbrechung, die einen Quetschschweißflansch (AS) umfasst, wobei die Karosserietafel miteinander verschweißt sind, wobei das Verbinden an dem Innenrand des Fensters ausgeführt ist,
**dadurch gekennzeichnet, dass** sie umfasst:
- zumindest einen Montagerahmen (RPC), der in ein einzelnes Stück gegossen ist, so dass die Öffnung zur Aufnahme des Fensters der Form des Rands der Scheibe folgt, und mit der Karosserie (CAR) entlang zwei Umfangslinien verschweißt ist, wobei eine Linie den Quetschschweißflansch (AS) umfasst und sich die andere Linie an der Karosserie auswärts der Öffnung zur Aufnahme des Fensters befindet, so dass der Innenrand des Fensters zu einem Teil des Montagerahmens (RPC) weist, wobei das andere Teil des Montagerahmens (RPC) das Fenster außerhalb des Umfangs des Fensters umgibt,
- eine Klebstofflinie (COL), die auf dem Montagerahmen in einer Position weiter hinten von dem Quetschschweißflansch (AS) zu dem Umfang des Fensters um den Quetschschweißflansch (AS) aufgetragen ist.

5. Fahrzeugkarosserie nach Anspruch 4,
**dadurch gekennzeichnet,dass**
der Montagerahmen (RPC) ein Teil des Karosserieaufbaus sein, über dem Aufbau aufgetragen oder beides sein kann.

6. Fahrzeugkarosserie nach Anspruch 4,
**dadurch gekennzeichnet, dass**
sie ferner eine undurchsichtige Beschichtung (SER) umfasst, die um den Umfang der Scheibe aufgetragen ist, um die Klebstofflinie (COL) zu bedecken, und so dass der Innenrand der undurchsichtigen Beschichtung sich nicht über den Quetschschweißflansch (AS) hinaus erstreckt.

## Revendications

1. Procédé de collage d'une vitre sur un véhicule, la carrosserie comportant au moins une ouverture de vitre comprenant une bride de joint de soudure (AS) où les panneaux de carrosserie sont soudés l'un sur l'autre, dans lequel le collage est effectué sur le bord intérieur de la vitre, **caractérisé en ce qu'**il comprend :
- une étape à laquelle un cadre de montage (RPC) est moulé d'un seul bloc de sorte que l'ouverture pour recevoir la vitre suive la forme du bord de la vitre,
- une étape à laquelle ledit cadre de montage (RPC) est monté et soudé sur ladite carrosserie (CAR) le long de deux lignes de périmètre, une ligne comprenant ladite bride de joint de soudure (AS), l'autre ligne étant sur ladite carrosserie, à l'extérieur de ladite ouverture pour recevoir la vitre, de sorte que ledit bord intérieur de la vitre soit face à une partie dudit cadre de montage (RPC), l'autre partie du cadre de montage (RPC) entourant la vitre hors du périmètre de la vitre,
- une étape à laquelle une ligne de colle (COL) est appliquée sur ledit cadre de montage (RPC) à une position plus à l'arrière de la bride de joint de soudure (AS), vers le périmètre de la vitre et autour de la bride de joint de soudure (AS).

2. Procédé selon la revendication 1, **caractérisé en ce que** ledit cadre de montage (RPC) fait partie de la structure de carrosserie ou est appliqué au-dessus de la structure ou les deux.

3. Procédé selon la revendication 1, **caractérisé en ce qu'**il comprend une autre étape à laquelle un revêtement opaque (SER) est appliqué autour du périmètre de la vitre afin de recouvrir ladite ligne de colle (COL) et de sorte que le bord intérieur dudit revêtement opaque ne s'étende pas au-delà de ladite bride de joint de soudure (AS).

4. Carrosserie de véhicule avec au moins une ouverture de vitre comprenant une bride de joint de soudure (AS) où les panneaux de carrosserie sont soudés l'un sur l'autre, dans laquelle le collage est effectué sur le bord intérieur de la vitre, **caractérisé en ce qu'**elle comprend :
- au moins un cadre de montage (RPC), moulé d'un seul bloc de sorte que l'ouverture pour recevoir la vitre suive la forme du bord de la vitre et soudé sur ladite carrosserie (CAR) le long de deux lignes de périmètre, une ligne comprenant ladite bride de joint de soudure (AS), l'autre ligne étant sur ladite carrosserie, à l'extérieur de ladite ouverture pour recevoir la vitre, de sorte que ledit bord intérieur de la vitre soit face à une partie dudit cadre de montage (RPC), l'autre partie du cadre de montage (RPC) entourant la vitre hors du périmètre de la vitre,
- une ligne de colle (COL) appliquée sur ledit cadre de montage (RPC) à une position plus à l'arrière de la bride de joint de soudure (AS), vers le périmètre de la vitre autour de la bride de joint de soudure (AS).

5. Carrosserie selon la revendication 4, **caractérisée en ce que** ledit cadre de montage (RPC) peut faire partie de la structure de carrosserie ou être appliqué au-dessus de la structure ou les deux.

6. Carrosserie selon la revendication 4, **caractérisée en ce qu'**elle comprend en outre un revêtement opaque (SER) appliqué autour du périmètre de la vitre afin de recouvrir ladite ligne de colle (COL) et de sorte que le bord intérieur dudit revêtement opaque ne s'étende pas au-delà de ladite bride de joint de soudure (AS).
